# DEMANDE DE BREVET EUROPEEN

(11) **EP 2 466 771 A1**
(43) Date de publication de la demande: **20.06.2012**
(21) Numéro de dépôt: 11001335.6
(22) Date de dépôt: 18.02.2011
(51) Int. Cl.: H04H 60/33, H04N 21/4223, H04N 21/442, H04N 21/4415, H04H 60/31, H04N 21/422

(54) **Dispositif d'audimétrie intelligent**

(30) Priorité: 16.12.2010 ES 201001241
(71) Demandeur: Olivier, Gérard, 28430 Alpedrete (Madrid) (ES); Alonso Feliz, Emilio, 28670 Villaviciosa de Odón, Madrid (ES)
(72) Inventeur: Olivier, Gérard, 28430 Alpedrete (Madrid) (ES); Alonso Feliz, Emilio, 28670 Villaviciosa de Odón, Madrid (ES)

(57) **Abrégé**

Le DAI est un système passif, il ne requiert donc aucune intervention de la part de l'usager. Il permet la captation et l'exploitation de données d'audience télévisée de façon fiable, complète, précise et intelligente qui sont ensuite traitées dans un centre serveur pour être mises à la disposition des requérants sous forme de tableaux statistiques et de comptes rendus soit en temps réel, soit à la demande.
Il est composé de:
• Un écran asservi à la télévision ou à d'autres sources de vidéo, audio ou photo. La fourniture de cet écran est facultative, le DAI pouvant être installé sur un écran préexistant.
• Une caméra de type WebCam.
• Une Unité Centrale (CPU) avec tuner de chaînes TV et ports de communication pour le transfert en temps réel via Internet (ou autre réseau ample) des données capturées vers un centre serveur. Une telle connexion permet également de naviguer sur Internet à partir du dispositif DAI.
• Plusieurs modules de software de reconnaissance et d'analyse de: l'architecture faciale des spectateurs, le suivi de leur regard, leur état émotionnel, de sources de vidéo et audio.
• Un module de software pour le traitement et le transfert des données capturées vers un centre serveur.

C'est dans ce centre serveur à distance que les données capturées par le DAI sont stockées, traitées et publiées sous forme de tableaux synoptiques, et de comptes rendus d'audiences qui peuvent être consultés par les requérants soit en temps réel, soit à la demande.

## Description

### Domaine de l'invention

La présente invention consiste en un dispositif de collecte et d'exploitation de données d'audience télévisée de façon précise et intelligente. La fonction du dispositif DAI (Dispositif d'Audimétrie Intelligent) est de capturer des données d'audience télévisée, pour ensuite les envoyer vers un centre serveur, qui les traitera, les consolidera et les exploitera sous forme de tableaux synoptiques et de rapports ou compte-rendus, le but final étant de produire des statistiques fiables, précises et complètes d'audiences télévisées à l'intention des requérants.

### Contexte et état actuel de la technique

Les dispositifs actuels de mesure d'audience télévisée appelés génériquement audimètres ou audimats, sont placés dans des foyers-sources préalablement sélectionnés en fonction de critères de représentativité statistique, aptes à constituer un panel d'audiences télévisées. Insérés entre la prise d'antenne et le téléviseur, ils enregistrent à une heure connue et pendant une durée connue également les données relatives au programme de télévision qui est regardé par le (ou les) membre du foyer panel qui s'est préalablement identifié en appuyant sur la touche qui l'identifie. Puis, à une heure déterminée et via une ligne téléphonique (classique, 3G ou autre système téléphonique) ils transmettent toutes ces données à un centre de traitement qui les met ensuite à la disposition des requérants sous forme de tableaux synoptiques et rapports.

Chacun des membres du foyer-source faisant partie du panel doit chaque fois s'identifier préalablement en appuyant sur son propre bouton de télécommande de l'audimètre et ce, après que le récepteur TV ait été allumé, de façon à ce que l'on sache exactement qui regarde quoi, à quelle heure et pendant combien de temps. D'autres boutons permettent à des invités éventuels de s'enregistrer également. Les informations en provenance des foyers-sources faisant partie du panel sont envoyées au centre de traitement qui les traduit en statistiques. Il existe une variante à ce système qui, sous la forme d'une montre bracelet, fonctionne sur la reconnaissance par ondes hertziennes des chaînes de TV (et de radio).

Les systèmes actuels sont tributaires de la disponibilité de chaque membre du panel à appuyer sur son bouton quand il allume la TV et à faire la même manoeuvre lorsqu'il ne la regarde plus. Ils sont incapables d'identifier et de reconnaître les téléspectateurs et ne peuvent mesurer leur degré d'attention, ce qui se traduit par des statistiques d'audiences peu fiables et peu significatives. Quant aux dispositifs sous forme de montre bracelet, ils sont inaptes à détecter et à mesurer l'audience de téléspectateurs invités qui ne font pas partie du panel.

### Résumé de l'invention

Le Dispositif d'Audimétrie Intelligent apporte quant à lui, d'importantes innovations technologiques permettant d'améliorer la fiabilité et d'affiner considérablement les informations sur les audiences télévisées.

En effet, s'agissant d'un système passif, il ne requiert aucune action de la part des membres du panel ; en outre, il est capable de fournir des informations plus complètes et nettement plus précises sur la qualité de l'audience.
Le dispositif DAI se compose essentiellement des éléments suivants :
- Un écran pour regarder normalement la télévision et d'autres sources de vidéo, audio ou photo. La fourniture de cet écran reste facultative, le DAI pouvant être installé sur un écran ou récepteur TV préexistant.
- Une caméra, de type Webcam par exemple.
- Une Unité Centrale (CPU) avec syntoniseur de chaînes de télévision et un port de communication pour le transfert par réseau de transmission de données (Internet ou autre réseau) des données capturées en temps réel vers un centre serveur à distance. Il est à noter que cette connexion permet aussi de naviguer sur Internet à partir du dispositif DAI. L'unité centrale est dotée de logiciels de base (incluant un système opérationnel, des drivers, un logiciel de sécurité et de gestion à distance, etc.) nécessaires à son bon fonctionnement.
- Un logiciel d'analyse et de reconnaissance d'architecture faciale humaine.
- Un logiciel du suivi de la direction du regard des spectateurs (*eyetraking*).
- Un logiciel de reconnaissance et d'analyse de l'état émotionnel des téléspectateurs.
- Un logiciel de reconnaissance et d'analyse des sources de vidéo, audio et audio-visuel.
- Un logiciel de traitement et de transfert vers le centre serveur de toutes les données capturées.

Dans le centre serveur, ces données sont stockées et traitées afin d'élaborer des tableaux synoptiques et des comptes rendus à consulter soit en temps réel, soit à tout moment par les requérants. Dans ce centre serveur ou centre de contrôle, on trouve :
- Un ensemble de serveurs redondants connectés à Internet (ou autre réseau ample), sur lesquels seront transférées les données capturées par les dispositifs locaux (DAI) implantés dans les foyers-sources.
- Un logiciel de base de données destiné à stocker et à consolider toutes ces données.
- Un module d'élaboration de tableaux synoptiques et de comptes rendus périodiques à l'intention des requérants.
- Un logiciel de contrôle et de gestion à distance des dispositifs locaux (DAI placés dans les foyers), permettant d'assurer le bon fonctionnement de l'ensemble du système. Il peut en outre adresser des questionnaires, des formulaires ou tout autre document à compléter éventuellement par les membres du panel.

Le DAI présente les innovations et avantages suivants :
- Grâce à sa webcam intégrée et à son software de reconnaissance biométrique, il détecte et identifie les téléspectateurs présents devant l'écran allumé. Il les classe par sexe et tranche d'âge. Le système ne requiert aucune intervention de leur part. Les membres du panel qui auront été pré selectionnés et paramétrisés dans le système seront reconnus avec exactitude et devront confirmer leur identification la première fois qu'ils allument le dispositif.
- Non seulement le DAI identifie et classifie les individus se trouvant devant l'écran, mais encore il détecte en permanence leur état émotionnel (tristesse, euphorie, somnolence, attention, etc.) grâce à son software de reconnaissance d'état émotionnel.
- De par son logiciel de reconnaissance du suivi de regard, il sait à tout moment si chaque spectateur regarde l'écran ou non, permettant ainsi de faire un distinguo intéressant entre l'audience active de l'audience passive. De plus, ce logiciel détecte constamment la zone que chaque spectateur regarde sur l'écran.
- Via Internet, son centre serveur peut envoyer en temps réel des questionnaires ou des formulaires dynamiques vers les dispositifs locaux, rendant ainsi le système interactif.
- Il détecte et analyse les sources d'émission et de reproduction vidéo, qu'elles proviennent de la TV ou d'autres dispositifs accessoires connectés à l'écran : il sait donc ainsi si les spectateurs regardent la TV ou le contenu de tout autre appareil qui lui est connecté (DVD, PC, radio ou autres) ou encore s'ils sont occupés à surfer / naviguer sur Internet.
- De même et grâce à l'information transmise par le signal TNT, le DAI est capable de remplir la même mission au sujet d'émissions TV préalablement enregistrées et actuellement regardées par les spectateurs. Idem avec les programmes de plateformes permettant la mise en attente temporaire de la lecture. Il est donc apte à capturer et analyser les pauses de lecture et le visionnement différé.
- Via Internet, il transmet en temps réel (pendant l'émission en cours) les données d'audience active et passive au centre serveur qui les traite et les consolide aussitôt sous forme de statistiques. Les requérants peuvent donc avoir accès en temps réel à l'information d'audience (monitorisation des émissions TV en direct, par exemple).

### Description détaillée de l'invention

De par ses importantes innovations technologiques, fonctionnelles et opérationnelles, ce système inaugure une nouvelle ère dans le domaine de la mesure d'audience télévisée, en améliorant de manière décisive la possibilité de savoir réellement et précisément quelle typologie de spectateurs regarde tel ou tel programme ou émission de TV, avec quel degré d'attention, dans quel état émotionnel, et tout cela en temps réel. De plus, son caractère passif le rend apte à mesurer l'audience dans toutes sortes de lieux publics, tels que bars, salles de spectacles ou encore en plein air lors de la retransmission d'événements sportifs par exemple. Il est à noter en outre qu'un tel système est toujours susceptible de bénéficier de l'évolution constante de la technologie sans toucher à sa conception et philosophie initiale.

### I. Spécifications du hardware des dispositifs locaux (DAI) placés dans les foyers-sources

### a. Écran ou moniteur.

Il s'agit d'un écran haut de gamme ou d'un moniteur, de taille adaptée à l'environnement dans lequel il sera placé. Il répond aux critères suivants :
i. capable de recevoir les émissions en HD ;
ii. muni de plusieurs entrées permettant de le connecter à différentes sources alternatives d'audio et / ou vidéo (gérées par l'unité principale) ;
iii. muni de haut-parleurs stéréo ;
iv. serti dans un cadre intégrant différents capteurs et sondes, la Webcam et un dispositif de retro-éclairage de nature à assurer une luminosité suffisante du milieu ambiant, pour le captage des données relatives aux spectateurs.
N.B.- La fourniture d'un écran spécifique tel que décrit ci-dessus n'est pas nécessairement requise, les capteurs et sondes, la Webcam, la CPU et les dispositifs accessoires pouvant être éventuellement intégrés à un écran existant.

### b. Capteurs et sondes

Ils assurent la communication avec la télécommande et autres périphériques tels que le clavier, la souris, ou le dispositif de pilotage du rétro-éclairage. Tous et toutes, y compris les capteurs de suivi du regard (*eyetracking*) sont dissimulés dans le cadre de l'écran.

### c. Rétro-éclairage.

Une chaîne d'ampoules de type LED, pilotées par la sonde de luminosité ambiante est insérée dans le cadre de l'écran : elle assure une luminosité ambiante constante, nécessaire au bon fonctionnement des autres capteurs et sondes, ainsi que de la webcam.

### d. Unité centrale (CPU) ou ordinateur

Le DAI est équipé d'un ordinateur ou CPU que l'on glisse au dos de l'écran. Ses caractéristiques sont celles d'un ordinateur dédié a la gestion avancée de graphiques et data process en temps réel. Cet ordinateur abrite l'ensemble des logiciels du dispositif local. Il contrôle l'écran, la webcam, le syntoniseur de TNT (DVB-TV) et le reste des périphériques (sources alternatives d'audio, de vidéo, etc.) grâce à des drivers et des logiciels appropriés. Ce CPU a également pour fonction d'ordonnancer les informations recueillies et de les transmettre au centre serveur au moyen d'une connexion Internet par câbles ou sans câble (par exemple 3G / 4G).

### e. Webcam.

Le DAI dispose d'une webcam de haute définition et forte sensibilité, dissimulée dans le cadre de l'écran. Sous le contrôle du logiciel de reconnaissance biométrique, elle a pour mission de saisir l'audience actuelle et ne pourra EN AUCUN CAS être utilisée pour capter et enregistrer des images de spectateurs. Les résultats de cette saisie de l'audience sont ensuite transformés sous forme de caractères alphanumériques. Il est à noter que ses qualités optiques lui permettent de fonctionner de manière tout à fait satisfaisante même en cas de luminosité faible ou de variation focale importante.

### f. Syntoniseur de TNT (DVB-TV).

Le DAI est équipé d'un syntoniseur de signal de Télévision Numérique Terrestre (TNT-TV) intégré à l'unité centrale : il peut donc, au moyen d'un câble coaxial d'antenne, se connecter au réseau de diffusion de TV conventionnelle. Ce syntoniseur est donc universel : il peut en effet recevoir toutes sortes de chaînes de télévision, qu'elles soient numériques ou analogiques, haute définition, ainsi que tous les émetteurs radio analogiques et digitaux.

### g. Télécommande.

Une télécommande classique, permet aux usagers de piloter leur DAI, ainsi que ses périphériques. Elle leur permet en outre d'accéder aux menus et éventuels messages interactifs qui leur sont envoyés dans le but de solliciter de leur part, soit une appréciation de spots publicitaires, soit une réponse à des questionnaires de satisfaction, soit à d'autres requêtes affichées à l'écran. Ses principales fonctions sont les suivantes :
i. Contrôler des paramètres de l'écran;
ii. Contrôler le syntoniseur TNT-TV
iii. Contrôler et sélectionner les sources accessoires de vidéo (Blu-ray, Disque Dur externe, etc.)
iv. Fournir, grâce à des boutons ad hoc, des réponses simples à des questionnaires dynamiques (oui, non, vrai, faux, etc...). Des boutons supplémentaires permettent en outre de sélectionner la réponse choisie à des questions à choix multiples (QCM).

### h. Clavier et souris sans fil.

Le DAI permet de naviguer tout à fait aisément sur Internet : il suffit pour cela de sélectionner la fonction correcte sur la télécommande. Le clavier et la souris se connectent au DAI sans fils.

### II. Éléments de Software des dispositifs locaux.

### a. Software base du dispositif placé chez les membres du panel.

L'unité centrale (CPU) du DAI dispose d'un système opérationnel, de drivers et des logiciels spécialisés nécessaires à une gestion fiable de tout l'équipement décrit ci-dessus.

### b. Logiciel de gestion et de sécurité implanté chez les membres du panel

Le DAI dispose de différents outils lui permettant d'être géré et diagnostiqué à distance : il ne tombe donc pratiquement jamais en panne. Il est en outre doté de sécurités antivol, antivirus et anti-piratage (anti-malware).

### c. Logiciel de reconnaissance biométrique.

Le software de reconnaissance biométrique a pour objectif d'interpréter les images des téléspectateurs captées par la webcam du DAI et de les traduire en un langage basé sur une série préétablie d'algorithmes de reconnaissance. Il contient les logiciels suivants :
i. *Face Tracking* pour la reconnaissance et le comptage de l'audience grâce au système d'analyse et de reconnaissance faciale.
ii. *Mood Tracking* pour la détection de l'état émotionnel des téléspectateurs.
iii. *Eye Tracking* pour la détection du suivi du regard des téléspectateurs.

### d. Software - applications spécifiques.

Le DAI dispose de différents modules de software VPC (Veri_Media Panel Controller) propres à cette invention: leur mission est d'exécuter les fonctions spécifiques du DAI.
i. VPC Source Analyzer: analyseur de la source de vidéo active.
ii. VPC Generator : il élabore les tableaux de données en évolution constante qui sont communiqués en temps réel au centre serveur.

### III. Composition du Centre Serveur.

### a. Hardware.

Le centre serveur ou de contrôle du système d'Audimétrie Intelligent dispose de l'équipement matériel et virtuel dont la capacité doit être à la mesure du nombre total de dispositifs locaux (DAI placés dans les foyers-sources et autres lieux) auxquels il est connecté. En outre, il doit être à même de répondre à tous les requerreurs qui s'y connectent par Internet, dans le but de consulter les informations recueillies sous forme de tableaux synoptiques.

Ces machines sont configurées de façon redondante avec un niveau maximum de sécurité de nature à garantir la qualité, la disponibilité et la confidentialité du service, conformément aux critères propres à un système de ce type.

### b. Software.

Le centre serveur ou de contrôle est doté d'éléments de software de base (système opérationnel, base de données et de publication) garantissant le bon fonctionnement de l'ensemble du système, ainsi qu'une gestion à distance correcte des dispositifs implantés à l'extérieur (foyers du panel par exemple). En plus, il dispose de modules serveurs de software applicatifs du DAI (tels que les Veri_Media Panel Controller) pour le traitement, l'exploitation et la consultation des données.

Les dessins en annexe illustrent cette invention :

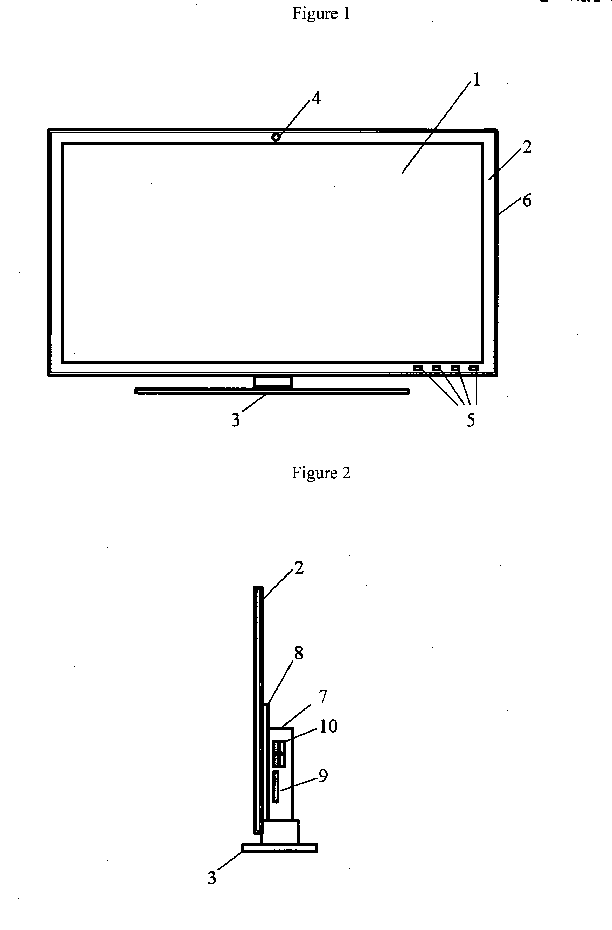

Figure 1 : vue frontale du DAI avec le détail de ses différents éléments.
Figure 2 : vue de profil du DAI avec le détail de ses différents éléments.

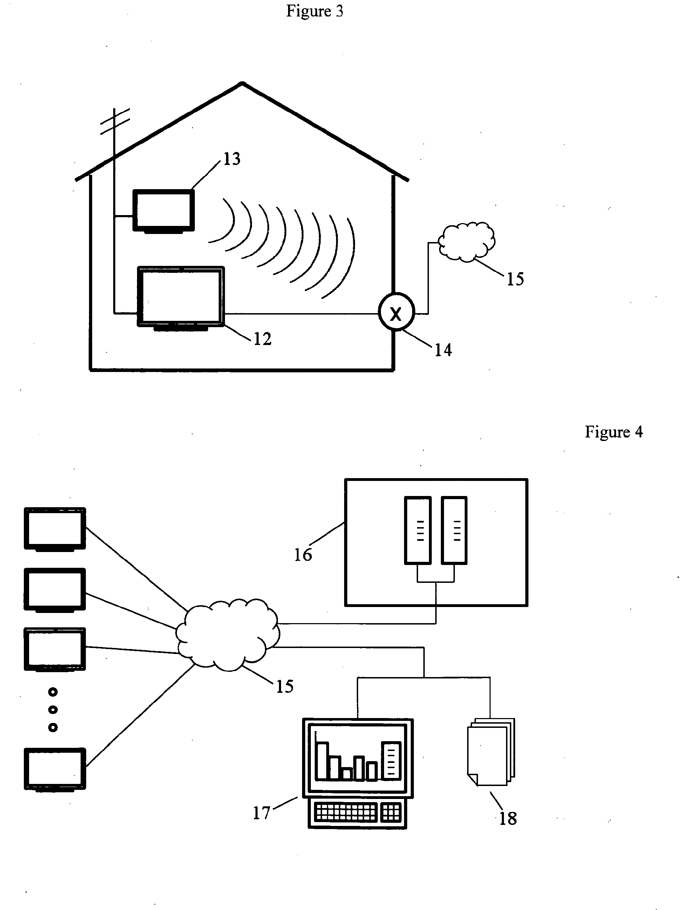

Figure 3 : schéma illustrant les connexions locales du DAI, dans le cas d'un foyer où sont implantés deux dispositifs, l'un (12) étant connecté au router (14) d'accès à la WAN (15) par câble, et l'autre (13) par connexion WiFi.
Figure 4 : représente schématiquement les connexions du système au niveau du WAN (15) entre les DAI et le centre serveur (16) où sont élaborés les tableaux synoptiques (17) et les rapports périodiques (18) publiés par le système.

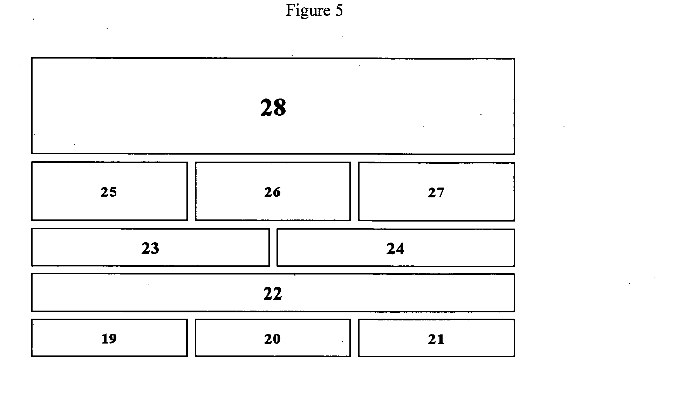

Figure 5. Tableau des unités du software du DAI. Elles figurent à plusieurs niveaux différents correspondant à une structure OSI où se trouvent : les drivers de gestion et de diagnostic à distance du hardware (19), de la récupération (20) et antivol (21) ; le système opérationnel (22); le module de gestion d'infrastructure (23) et sécurité du software, antivirus et anti-piratage (anti-malware) (24); les modules de reconnaissance biométrique (25) et du suivi du regard (26); le module d'analyse de sources audio et vidéo (27); et le module de génération et transmission de données au centre serveur (28).

### Mode de réalisation préféré

La réalisation du Dispositif d'Audimétrie Intelligent tel que décrit ici fait appel aux composants les plus modernes actuellement disponibles sur le marché. Nul doute qu'elle évoluera parallèlement à l'apparition future de composants toujours plus avancés, plus performants, plus fiables, tout en restant fidèle à sa philosophie de départ.

### a. Écran.

i. Tailles (selon type) de 14" à 80". Format 16:9.
ii. Technologie de rétro-éclairage LED.
iii. Définition : FHD 1080p.
iv. Compatibilité 3D.
v. Luminosité (brillance) égale ou supérieure à 500 cd/m2
vi. Fréquence supérieure à 200 Hz
vii. Taux de contraste dynamique 10.000.000:1
viii. Nombre d'entrées suffisant pour connexions à des sources auxiliaires de vidéo / audio (gérées par la CPU) : vidéo par composants, SCART, RGB, DVI, HDMI (x4), USB (x3), optique, PS, port pour cartes de mémoire multi-formats, CI Slot (pour TNT payante), prise pour écouteurs (x2).
ix. 2 Haut-parleurs stéréophoniques 10W + 10W.
x. Cadre d'écran en plastique translucide, conçu de manière à pouvoir y dissimuler la webcam, le collier d'ampoules LED pour le rétro-éclairage, ainsi que les différents senseurs et sondes, ceci dans le but de respecter l'esthétique de l'ensemble. Le boîtier de la CPU est, quant à lui, inséré dans des glissières vissées au dos de l'écran.

### b. Capteurs et sondes.

i. Sonde de luminosité ambiante (cellule photo-électrique).
ii. Capteur infrarouge des signaux provenant de la télécommande.
iii. Capteur infrarouge des signaux provenant du clavier et de la souris sans fils.
iv. Émetteurs-récepteurs à infrarouge pour suivre les mouvements des pupilles.

### c. Chaîne de rétro-illumination LED.

i. Blanc monochrome translucide
ii. Ampoules LED de type SMD de haute luminescence

### d. CPU.

i. Processeur Intel® Core™ i5-670 à 3,46 GHz fanless (non ventilé).
ii. Chipset Intel® vPro™.
iii. Intel® Active Management Technology.
iv. 4 GB SDRAM
v. 4 MB Intel® Smart Caché
vi. Graphiques Intel® HD
vii. Carte graphique NVIDIA® GeForce™ G310 de 512 MB
viii. HDD SATA 320 Gb
ix. Lecteur de CD / DVD / Blu-Ray.
x. Carte réseau avec connexion LAN câblée (RJ45) et WiFi.
xi. Module de connexion Bluetooth®
xii. Composants de qualité industrielle.

### e. Caméra.

i. Optique grand angle, haute précision.
ii. Senseur Full HD 1080p.
iii. Auto Focus 4" - ∞.
iv. Technologie TrueColor, ClearFrame.
v. Connexion 4 Gbps (USB 3.0)
vi. Haute sensibilité pour fonctionnement optimum dans des conditions de faible luminosité.

### f. Syntoniseur de TNT (DVB-TV).

i. PCI Express x1.
ii. Syntoniseur de télévision analogique, DVB-TV et de Radio FM
iii. Apte à la réception de chaînes de HDTV.
iv. Son stéréophonique.
v. Entrée d'antenne coaxiale DVB-TV.

### g. Télécommande.

i. Contrôle des paramètres de l'écran (brillance, contraste, volume du son, modes audio et vidéo, programmateur d'allumage ON-OFF, mode veille, etc.)
ii. Contrôle du syntoniseur DVB-TV (configuration et sélection des chaînes, scan mode, PiP, sélection de la résolution, etc.)
iii. Contrôle du lecteur de DVD / Blu-Ray (reproduction, avance, retour, image par image, arrêt, etc.)
iv. Contrôle du sélecteur de sources de vidéo.
v. Série de boutons spécifiques pour répondre aux enquêtes dynamiques. Boutons de sélection des réponses booléennes (oui-non, vrai-faux, etc.) et jusqu'à 10 boutons pour la sélection d'options numériques.

### h. Clavier et souris sans fil.

i. Clavier et souris de type Microsoft™ infrarouge / Bluetooth®

Le domaine d'application industrielle de cette invention est l'audimétrie, c'est à dire la mesure de l'audience télévisée.

## Revendications

1. Dispositif d'audimétrie intelligent **caractérisé en ce qu'**il est composé d'un écran (1) de taille comprise entre 14" et 80" doté d'un cadre (2) et d'un pied (3) dont le design spécifique est apte à loger une caméra de type WebCam de haute sensibilité (4), plusieurs senseurs pour l'interconnexion de différents périphériques (5) et une collier de micro-ampoules LED (6); une unité centrale de process ou CPU (7) annexe fixée de manière amovible au dos de l'écran au moyen d'un jeu de coulisses (8), dotée d'un syntoniseur de télévision numérique terrestre (DVB-TV) (9) et de différents ports d'entrée en relation avec des sources accessoires d'audio et de vidéo (10); une télécommande multifonctionnelle; des composants de software nécessaires intégrés en une couche de drivers de faible niveau de sécurité de hardware (19), (20), (21), un système opérationnel (22), un ensemble de modules de gestion et de sécurité de software antivirus et anti-piratage (anti-malware) (23), (24), un ensemble de modules de reconnaissance biométrique et d'analyse de sources audio et vidéo (25), (26), (27) et un module de génération et de transmission de données d'audience captées (28); tout cela interconnecté de façon à permettre le captage des données d'audience précise en temps réel, sans avoir besoin de l'intervention de l'audience grâce à la reconnaissance de l'architecture faciale du ou des téléspectateurs et à l'analyse des sources de vidéo projetées à l'écran, ainsi que la transmission de ces données par un réseau ample (Internet) (15) sur un centre serveur (16) pour sa consolidation, exploitation et consultation en temps réel sous forme de tableaux de bord online (17) et rapports périodiques (18).

2. Selon la revendication n°1 **caractérisé en ce que** le DAI pourra être adapté et installé avec tous ses composants et fonctionnalités à un écran pré-existant par un système de connexion par câbles.
